# EUROPEAN PATENT APPLICATION

(11) **EP 4 092 585 A1**
(43) Date of publication of application: **23.11.2022**
(21) Application number: 20914223.1
(22) Date of filing: 17.01.2020
(51) Int. Cl.: G06N 20/00

(54) **CONTROL METHOD, CONTROL PROGRAM, AND INFORMATION PROCESSING DEVICE**

(71) Applicant: FUJITSU LIMITED, Kawasaki-shi, Kanagawa 211-8588 (JP)
(72) Inventor: MAEDA, Wakana, Kawasaki-shi, Kanagawa 211-8588 (JP)
(74) Representative: Hoffmann Eitle
(86) International application number: PCT/JP2020/001601
(87) International publication number: WO 2021/144992

(57) **Abstract**

A control method includes: obtaining a data group including data that loses an attribute value of at least one of attribute items among a plurality of attribute items each defining a plurality of attribute values; selecting, based on an appearing frequency of each of the attribute values in the obtained data group, one or more attribute values included in the plurality of attribute values defined for each of the plurality of attribute items; generating data (3b) having one of the one or more attribute values selected for each of the plurality of attribute items as an item value for each of the plurality of attribute items; generating inferring data (3e) including the generated data (3b) and an inference result obtained by inputting the generated data (3b,31i) to a trained model (3c); and transmitting a request for an evaluation of inference accuracy of the inferring data (3e) to a provider of the data group.

## Description

### TECHNICAL FIELD

The present invention relates to a control method, a control program, and an information processing device.

### BACKGROUND ART

In recent years, business utilizing personal data has attracted attention. The personal data is data obtained by collecting and accumulating various pieces of information relating to an individual and including, for example, private information capable of identifying the individual.

One of the examples of the business utilizing personal data is a scheme in which a service provider receives anonymously processed personal data (hereinafter referred to as "anonymously processed data") from the holder of the personal data and trains a model with machine learning technique, using the anonymously processed data.

In this scheme, for example, the service provider constructs a model for performing a given processing, using the anonymized data as training data, and provides a service for using the model to the holder. The holder inputs the holding personal data into the model, and thereby obtains a given processing result of the personal data as an output (inference result) of the model.

### CITATION LIST

### PATENT DOCUMENT

[Patent Document 1] International Publication Pamphlet No. WO2019/069618

### SUMMARY OF THE INVENTION

### PROBLEMS TO BE SOLVED BY THE INVENTION

The service provider may verify the inference accuracy of the constructed model and modify the model according to the verification result. However, the data input by the holder at the time of actual operation is sometimes personal data (hereinafter referred to as "raw data") not subjected to an anonymizing process different from the anonymized data used as the training data at the time of machine learning.

Also, from the viewpoint of privacy protection, a service provider may be restricted from obtaining raw data from a holder, and it may be difficult to evaluate the inference accuracy of the model used in actual operation, using the raw data.

In order to verify the inference accuracy of the model, it is considered that the service provider generates a test pattern covering all possible combinations of items and values of the items included in the anonymized data on the basis of the items included and the values of the items. In this case, the service provider requests the holder to generate test data based on the test pattern and to verify the inference accuracy of the model, using the test data, and receives the verification result from the holder.

However, as the number of items and the number of values included in personal data increase, the number of combinations in the test pattern increases. As the number of combinations in the test pattern increases, the number of records of test data generated on the basis of the test pattern also increases, so it is assumed that the processing load of a computer verifying the model increases.

In one aspect, one of the objects of the present invention (US 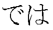 present embodiment) is to reduce the load for evaluating a model.

### MEANS TO SOLVE THE PROBLEM

According to an aspect of the embodiment, a computer-implemented control method includes: obtaining a data group including data that loses an attribute value of at least one of attribute items among a plurality of attribute items each defining a plurality of attribute values; selecting, based on an appearing frequency of each of the attribute values in the obtained data group, one or more attribute values included in the plurality of attribute values defined for each of the plurality of attribute items; generating data having one of the one or more attribute values selected for each of the plurality of attribute items as an item value for each of the plurality of attribute items; generating inferring data including the generated data and an inference result obtained by inputting the generated data to a trained model; and transmitting a request for an evaluation of inference accuracy of the inferring data to a provider of the data group.

### EFFECT OF THE INVENTION

In one aspect, the load to evaluate a model can be reduced.

### BRIEF DESCRIPTION OF DRAWINGS

FIG. 1 is a diagram illustrating a method according a comparison example;
FIG. 2 is a diagram illustrating an example of verification of a model with raw data;
FIG. 3 is a diagram illustrating an example of verification of a model with anonymous data;
FIG. 4 is a diagram illustrating a method for obtaining a verifying result effective as a performance reference value of a model according to the comparison example;
FIG. 5 is a diagram illustrating a method for obtaining a verifying result effective as a performance reference value of a model according to the comparison example;
FIG. 6 is a diagram illustrating a method for obtaining a verifying result effective as a performance reference value of a model according to the embodiment;
FIG. 7 is a block diagram illustrating an example of a functional configuration of a machine learning system according to the embodiment;
FIG. 8 is a diagram illustrating an example of attribute information;
FIG. 9 is a diagram illustrating a combination generating unit;
FIG. 10 is a diagram illustrating an adopting element number;
FIG. 11 is a diagram illustrating an adopting element number determining unit;
FIG. 12 is a diagram illustrating a process performed by an adopting element number determining unit;
FIG. 13 is a diagram illustrating an element extracting unit;
FIG. 14 is a diagram illustrating a process performed by an element extracting unit;
FIG. 15 is a diagram illustrating an example of a generating process of an inferring table by the combination generating unit;
FIG. 16 is a flow diagram illustrating an example of operation of a server according to the embodiment;
FIG. 17 is a diagram illustrating an example of operation of the server;
FIG. 18 is a diagram illustrating an example of operation of the server;
FIG. 19 is a diagram illustrating an example of operation of the server;
FIG. 20 is a flow diagram illustrating an example of operation of a terminal according to the embodiment;
FIG. 21 is a block diagram illustrating an example of the functional configuration of a server according to a first modification;
FIG. 22 is a flow diagram illustrating an example of operation of a server according to the first modification;
FIG. 23 is a block diagram illustrating an example of a functional configuration of a server according to a second modification;
FIG. 24 is a diagram illustrating an example of operation of a server according to the second modification; and
FIG. 25 is a block diagram illustrating an example of a hardware configuration of a computer according to the embodiment.

### DESCRIPTION OF EMBODIMENT(S)

Hereinafter, an embodiment of the present invention will now be described with reference to the drawings. However, the embodiments described below are merely illustrative and are not intended to exclude the application of various modifications and techniques not explicitly described below. For example, the present embodiment can be variously modified and implemented without departing from the scope thereof. In the drawings used for the following embodiment, the same reference symbols denote the same or similar parts, unless otherwise specified.

### <1> One Embodiment:

### <1-1> Comparison Example:

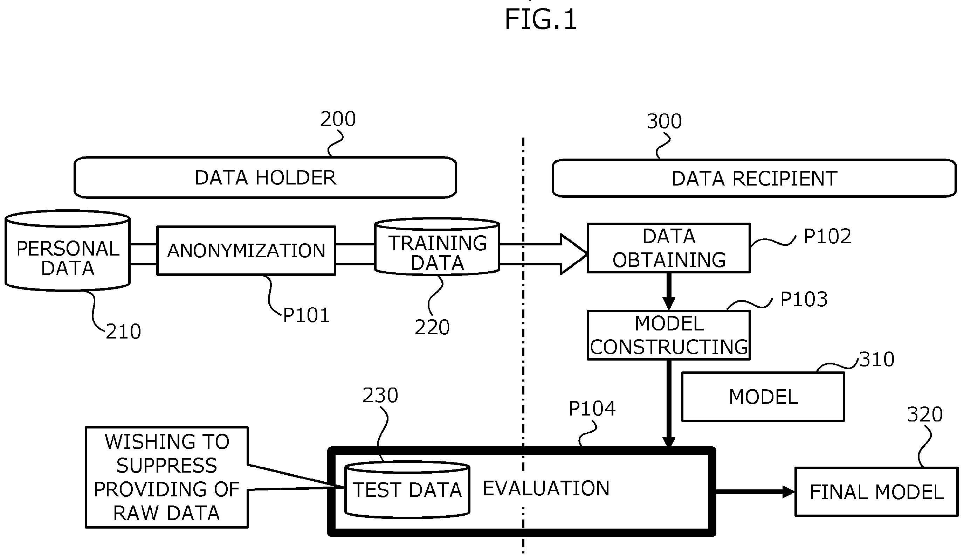

FIG. 1 is a diagram illustrating a method according to a comparison example. As illustrated in FIG. 1, a holder 200 of personal data 210 provides training data 220 obtained by anonymization on the personal data 210 (process P101) to a recipient 300, which is a third party such as a service provider.

Anonymization is, for example, a process of removing private information from the personal data 210. One of the reasons for anonymization performed on personal data 210 is the revised Act on the Protection of Personal Information, which was revised in Heisei Fiscal Year (FY) 27 (FY2015) in Japan. This is because, the revised Act on the Protection of Personal Information allows the holder 200 to provide the personal data 210, if being anonymized so as not to identify individuals, to the recipient 300 without the consent of each individual.

The recipient 300 obtains the training data 220 from the holder 200 (process P102) and constructs a model 310 (process P103). The recipient 300 evaluates (verifies) the inference accuracy of the model 310, using test data 230 provided by the holder (process P104), and corrects the model 310 according to the evaluating result, so that a final model 320 to be used in the service provided to the holder 200 is completed.

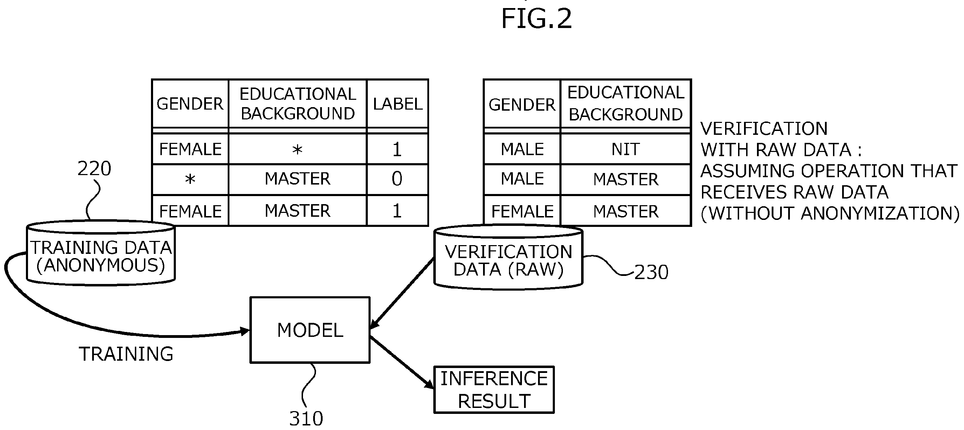

In operation in which the final model 320 infers a result with raw data, an ideal operation inputs the test data (verifying data) 230 into the model 310 without anonymization (in the state of being raw) as illustrated in FIG. 2. However, due to the constraint of, for example, the revised Act on the Protection of Personal Information mentioned above, it is difficult for the holder 200 to include raw data in the test data 230 to be provided to the recipient 300.

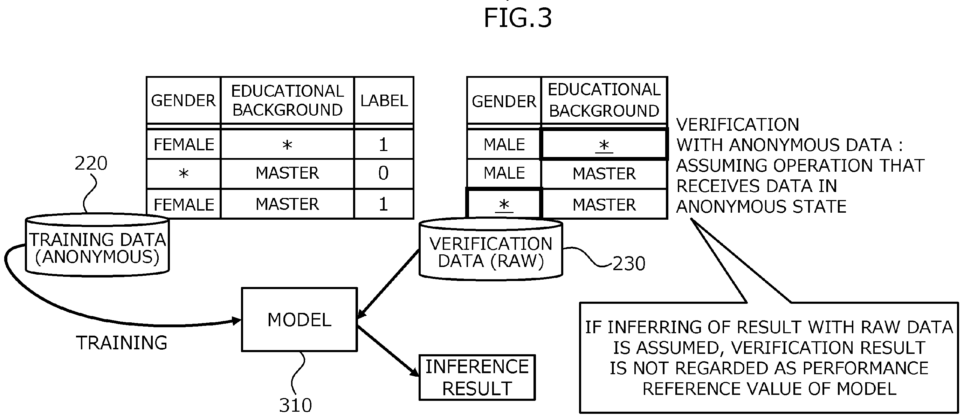

For this reason, the example of FIG. 1 assumes operation in which, as illustrated in FIG. 3, the test data 230 being in an anonymous state achieved by removing the values of gender and education background is input into the model 310.

However, in operation in which the final model 320 infers raw data, even if verification is performed, using anonymous data as in the example of FIG. 3, it is difficult to obtain a verification result effective as a reference value of the performance of the model 310.

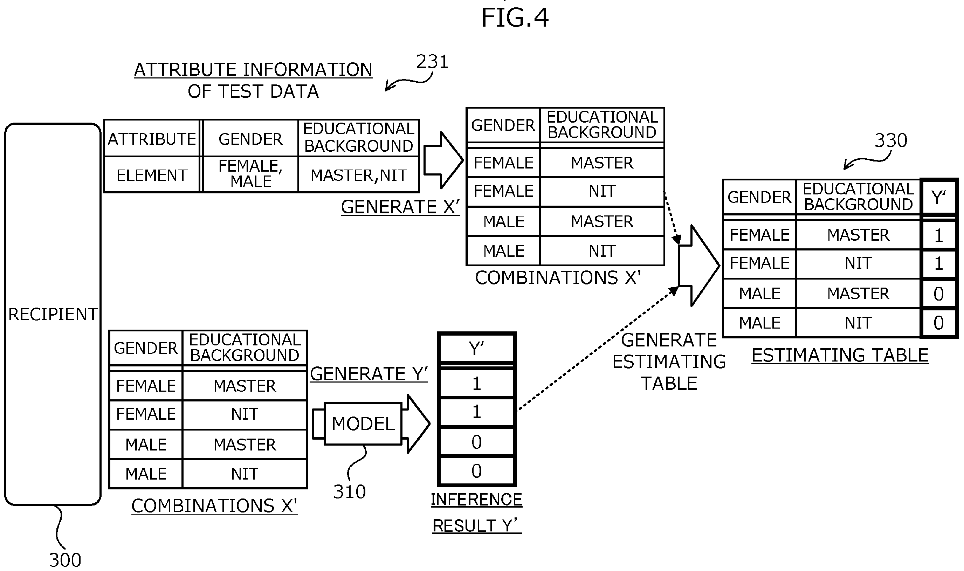

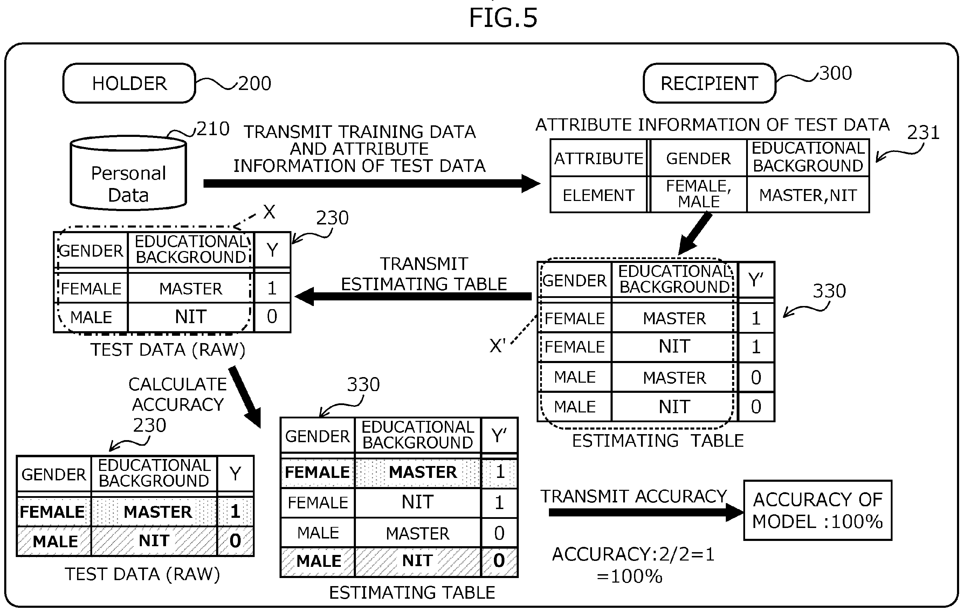

FIGS. 4 and 5 are diagrams illustrating a method for obtaining an effective verification result according to the comparison example. As illustrated in FIGS. 4 and 5, the recipient 300 obtains the training data 220 and the attribute information 231 of the test data 230 from the holder 200.

As illustrated in FIG. 4, the attribute information 231 is information in which attributes included in data and elements of the attributes are listed. The attributes are column names of table data, such as gender or education background. An element of an attribute is a value that an attribute (column) can have. For example, if the attribute is gender, the elements will be female and male.

As illustrated in FIGS. 4 and 5, the recipient 300 generates a possible combinations X' of attributes and elements based on the attribute information 231, and generates an inference result Y' inferred with the model 310 for the combinations X'. The recipient 300 then generates an estimating table 330 that binds the combinations X' with the inference result Y'.

The recipient 300 requests the holder 200 to evaluate the inference accuracy of the estimating table 330. The holder 200 verifies the inference accuracy of the model 310 by comparing the test data 230 (raw data) including the combinations X and the correct inference result (classification result) Y with the estimating table 330, and sends the accuracy to the recipient 300. This allows the recipient 300 to evaluate the model 310 with the raw data without accessing the raw data. In the example of FIG. 5, since the data of {female, master, 1} and {male, National Institute of Technology (NIT), 0} included in the test data 230 matches the two pieces of data included in the estimating table 330, the accuracy is 100%.

However, in the method according to the comparison example illustrated in FIGS. 4 and 5, as the dimension of the test data 230 increases, the number of combinations increases and the size of the estimating table 330 also increases. This increases the usage volume of storage regions of computers used by the recipient 300 and the holder 200, and the processing loads and processing time of processors of the computers.

For example, if the categorical attribute of "Adult data", which is open data by the U.S. census, is used as the test data 230, the combinations X' of the attribute information 231 is 37, 195, 200 in total. As the attributes of such test data 230 further increases, the combinations come to be further larger.

As a solution to the above, description will be made in relation to a method of reducing a load for evaluating a model in one embodiment.

### <1-2> Description of Machine Learning System:

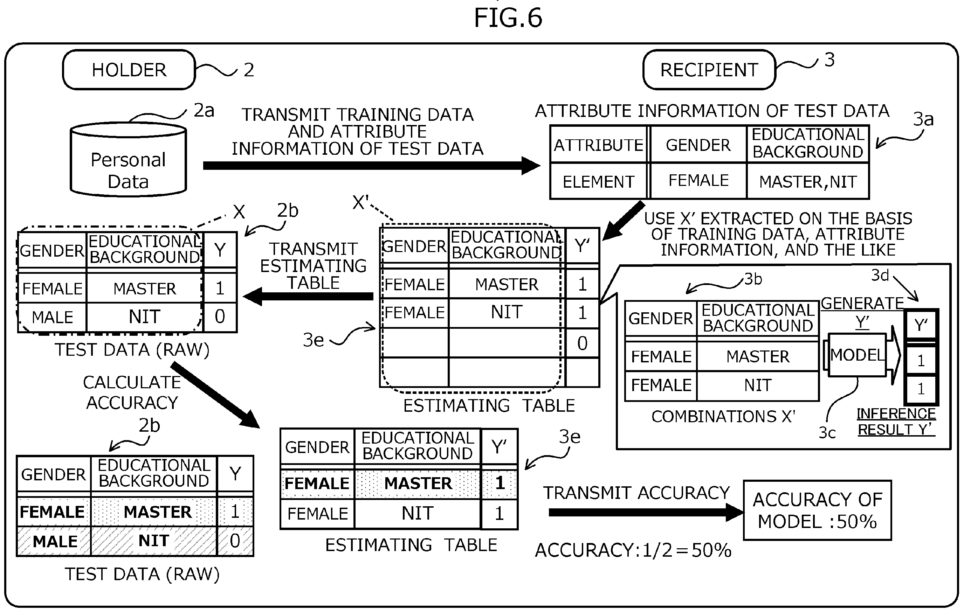

FIG. 6 is a diagram illustrating a method for obtaining a verification result effective as a reference value of performance of a model 3c according to one embodiment. In the method of the one embodiment, the computer used by a recipient 3, which is the service provider, may perform the following processes (a) to (e).

(a) As illustrated in FIG. 6, the computer obtains training data from the holder 2. The training data is an example of a data group including data that loses an attribute value of at least one of attribute items among multiple attribute items each defining multiple attribute values, and is, for example, data obtained by performing an anonymizing process on the personal data 2a by a holder 2. The computer may generate the attribute information 3a based on the training data, or may acquire the attribute information 3a of the training data from the holder 2.

(b) The computer selects, based on an appearing frequency of each of the attribute values included in the training data, one or more attribute values included in the multiple attribute values defined for each of the multiple attribute items.

(c) The computer generates combinations 3b each including any one of the selected one or more attribute values as an attribute value of each of the multiple attribute items.

For example, in the above processes (b) and (c), the computer generates the combination 3b in which the attribute values included in the test data are extracted on the basis of the attribute information 3a of the training data.

(d) The computer generates an estimating table 3e including the generated combinations 3b and the inference result 3d obtained with the trained model 3c using the combination 3b as an input.

(e) The computer transmits a request for evaluation of the inference accuracy of the generated estimating table 3e to the computer used by the holder 2, which is the provider of the training data.

Through the above processes (a) to (e), the computer used by the holder 2 verifies the accuracy of the model 3c that has output the estimating table 3e by comparing the test data 2b with the estimating table 3e, and transmits the verified accuracy to the computer used by the recipient 3. In the example of FIG. 6, since the data {female, master, 1} between the two pieces of data included in the test data 2b matches the data included in the estimating table 3e, the accuracy is 50%.

As described above, through the processes (a) to (e), the combination 3b is generated on the basis of one or more attribute values selected based on the appearing frequency in the training data, and the estimating table 3e is generated. For example, if one or more attribute values each having a high appearing frequency are selected, the estimating table 3e includes data of one or more attribute values having a high possibility of appearing in the test data 2b. Therefore, the ratio of the number of effective rows in the estimating table 3e can be improved or maintained, in other words, the decrease of the number of effective rows can be suppressed as compared with the case where the selection is not performed. In addition, since the number of combinations of attribute values is reduced by the selection, the number of rows (number of records) in the estimating table 3e can be suppressed.

### <1-3> Example of Functional Configuration of Machine Learning System:

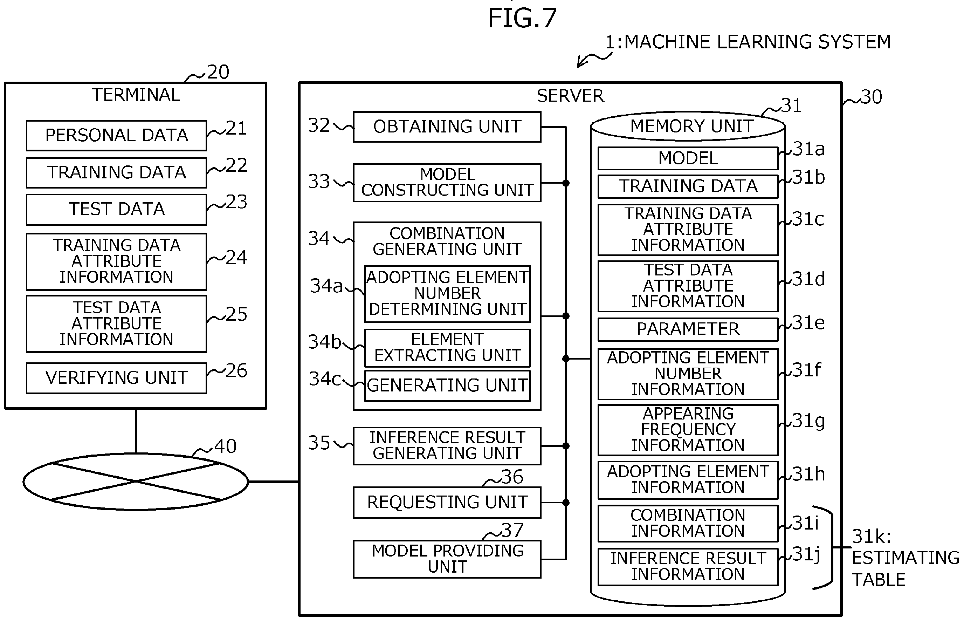

FIG. 7 is a block diagram illustrating an example of a functional configuration of a machine learning system 1 according to the one embodiment. As illustrated in FIG. 7, the machine learning system 1 according to the one embodiment may illustratively include one or more terminals 20 and a server 30. The terminals 20 and server 30 may be communicably coupled to each other by a network 40.

The network 40 may include a WAN (Wide Area Network), a LAN (Local Area Network), or a combination thereof. The WAN may include the Internet and the LAN may include a VPN (Virtual Private Network).

The terminal 20 is an example of a computer used by the holder 2 (see FIG. 6), who holds the personal data 21 and provides the training data 22. Each terminal 20 may illustratively include personal data 21, training data 22, test data 23, training data attribute information 24, test data attribute information 25, and a verifying unit 26.

The personal data 21 is an example of the personal data 2a illustrated in FIG. 6, and is a data group (raw data) that collects and accumulates various information about an individual, including private information that can identify the individual and information that cannot identify an individual. The information that cannot identify an individual may include, for example, information that is not associated with the individual and that is anonymized. The personal data 21 may be used for services that the server 30 provides by using a model 31a that has completed construction and verification.

The training data 22 is a data group used for training (learning) of the model 31a, and may be a data group subjected to an anonymizing process. The anonymizing process may be a known process such as, for example, deletion of a cell containing information that can identify an individual. The training data 22 is at least part of a data group included in the personal data 21 or the test data 23, and may be a data group subjected to an anonymizing process or the like.

The test data 23 is an example of the test data 2b illustrated in FIG. 6, and is an example of an evaluation data group to be used for evaluation of the inference accuracy of the estimating table 31k. For example, the test data 23 is a data group (raw data) including private information, which is used to verify the inference accuracy of the model 31a trained with the training data 22. As an example, the test data 23 may include a combination X of attributes and elements and a correct inference result Y. The attribute may be referred to as an "attribute item", and the element may be referred to as an "attribute value" or an "item value".

The training data attribute information 24 is an example of the attribute information 3a illustrated in FIG. 6, and is an example of the first information being related to the multiple attribute values defined for each of the multiple attribute items included in the training data 22. The test data attribute information 25 is an example of second information being related to multiple attribute values defined for each of multiple attribute items included in the test data 23. The attribute information 24 and 25 may have the same data structure.

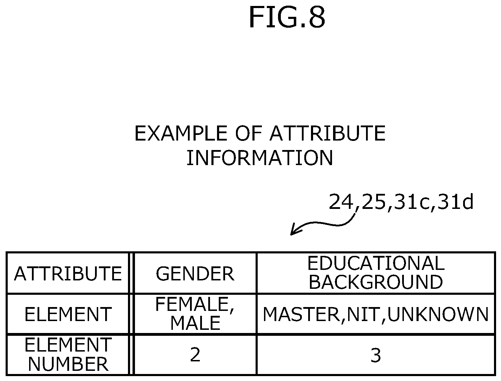

FIG. 8 is a diagram illustrating an example of the attribute information. As illustrated in FIG. 8, the attribute information 24 and 25 may include items of attribute, element, and element number. The item "attribute" is an example of an attribute item included in the data and indicate a column name of table data such as gender and education background. The item "element" is a value that an attribute (column) can have. The item "element number" is the number of values that an attribute can have. In the attribute information 24 and 25, "unknown" may be set in the element of the cell deleted by an anonymizing process, for example.

Upon receiving the estimating table 31k, which is an example of the inference data, from the server 30, the verifying unit 26 compares the test data 23 with the estimating table 31k to verify (evaluate) the inference accuracy of the estimating table 31k, and transmits the verification result to the server 30.

The server 30 is an example of a computer used by the recipient 3 (see FIG. 6) who receives the personal data 21, and is an example of an information processing device which constructs the model 31a by training and verification and which provides a service for using the constructed model 31a to the terminal 20.

The server 30 may be a virtual server (Virtual Machine (VM)) or a physical server. The function of the server 30 may be achieved by one computer or by two or more computers. Further, at least some of the functions of the server 30 may be implemented using Hardware (HW) resources and Network (NW) resources provided by cloud environment.

The server 30 may illustratively include a memory unit 31, an obtaining unit 32, a model constructing unit 33, a combination generating unit 34, an inference result generating unit 35, a requesting unit 36, and a model providing unit 37.

The memory unit 31 is an example of a storage region and stores various kinds of information used for constructing, verifying, and providing the model 31a. As illustrated in FIG. 7, the memory unit 31 may be capable of storing, for example, a model 31a, training data 31b, training data attribute information 31c, test data attribute information 31d, a parameter 31e, adopting element number information 31f, appearing frequency information 31g, adopting element information 31h, combination information 31i, and inference result information 31j.

The obtaining unit 32 obtains information used for constructing and verifying the model 31a from the terminal 20. For example, the obtaining unit 32 may obtain the training data 22 used for constructing the model 31a from the terminal 20 and store the training data 22, serving as the training data 31b, into the memory unit 31. In other words, the obtaining unit 32 obtains a data group including data that loses an attribute value of at least one of attribute items among multiple attribute items each defining multiple attribute values.

Further, the obtaining unit 32 may obtain the training data attribute information 24 and the test data attribute information 25 used for verifying the model 31a from the terminal 20 and store the information 24 and 25, as the training data attribute information 31c and the test data attribute information 31d, respectively, into the memory unit 31. The obtaining unit 32 may generate the training data attribute information 31c by performing aggregation, analysis, and the like on the training data 31b.

The model construction unit 33 trains the model 31a which is an example of the model 3c illustrated in FIG. 6 by machine learning the model 31a using the training data 31b. The method of machine learning the model 31a can be achieved by any known methods. The model 31a may be any machine learning model, and in one embodiment, the model 31a is, for example, a machine learning model that classifies input data.

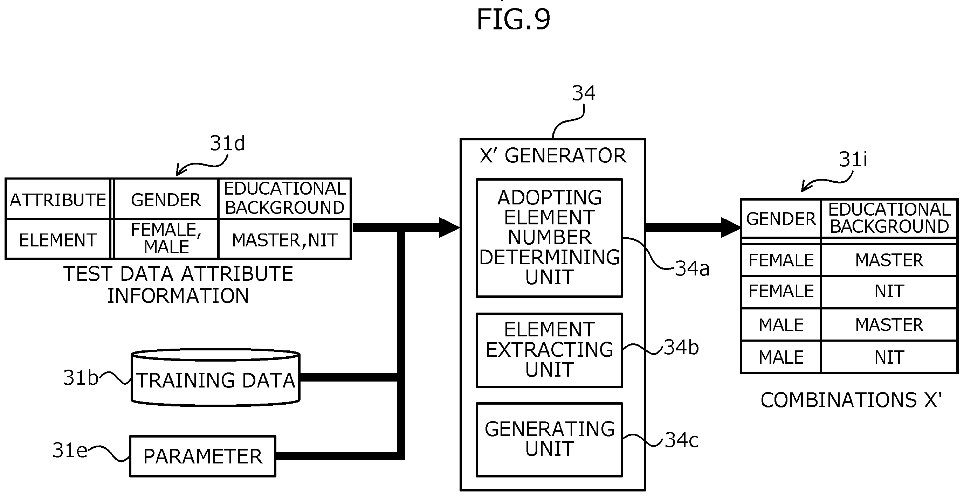

The combination generating unit 34 generates combination information 31i for verifying the inference accuracy of the model 31a having been trained by the model constructing unit 33. For example, as illustrated in FIG. 9, the combination generating unit 34, serving as a combination X' generator generates combination information 31i by using training data 31b and the parameter 31e in addition to the test data attribute information 31d. For this purpose, the combination generating unit 34 may include an adopting element number determining unit 34a, an element extracting unit 34b, and a generating unit 34c.

The adopting element number determining unit 34a determines an adopting element number of each attribute and stores the element number as the adopting element number information 31f into the memory unit 31.

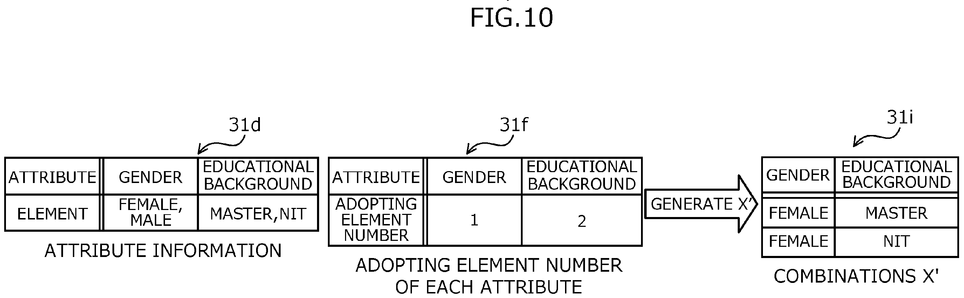

As illustrated in FIG. 10, the adopting element number is indicative of the number of elements to be adopted (selected number) for each attribute when the combinations X' are to be generated. FIG. 10 illustrates an example of generating, when the adopting element number information 31f is the gender:1 and the education background: 2, combinations X' including one (e.g., female) of the gender elements and two elements of the education background in the test data attribute information 31d.

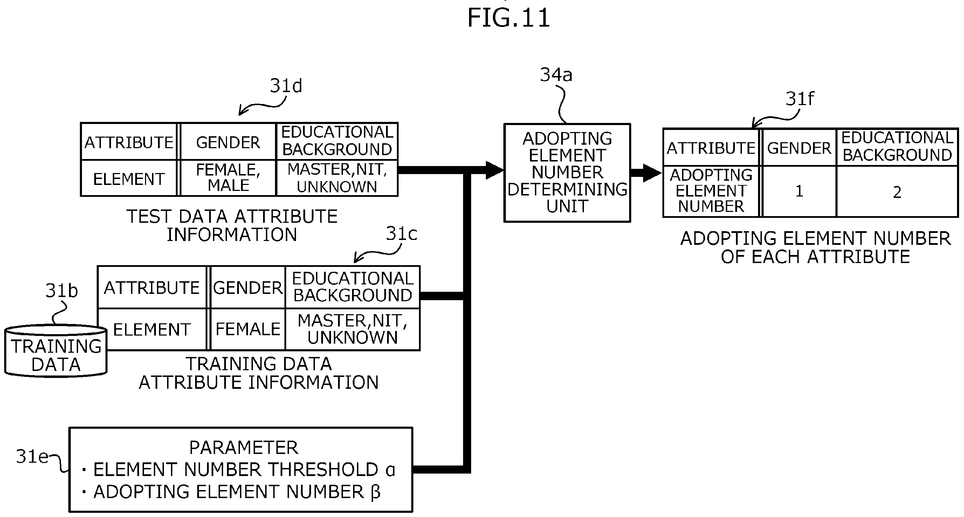

For example, as illustrated in FIG. 11, the adopting element number determining unit 34a determines the adopting element number of each attribute based on the test data attribute information 31d, the training data attribute information 31c, and the parameter 31e. The parameter 31e may include an element number threshold α and an adopting element number β.

The element number threshold value α is a lower limit threshold value for suppressing a decrease in the adopting element number for an attribute having a small number of elements. For example, if the adopting element number of an attribute having a small number of elements decreases, the number of effective rows easily decreases. Therefore, a threshold that can be expected to suppress a decrease in the number of effective rows may be set in the element number threshold α.

The adopting element number β is information that defines how to decrease the adopting element number and is an example of a given rule. The adopting element number β is exemplified by various rules such as subtracting 1 from the original element number (" (element number) -1"), multiplying the original element number by a given ratio, and determining a value according to the original element number. The reason for using the adopting element number β is to make it possible to adjust a value capable of maintaining the number of effective rows while decreasing the number of estimating rows.

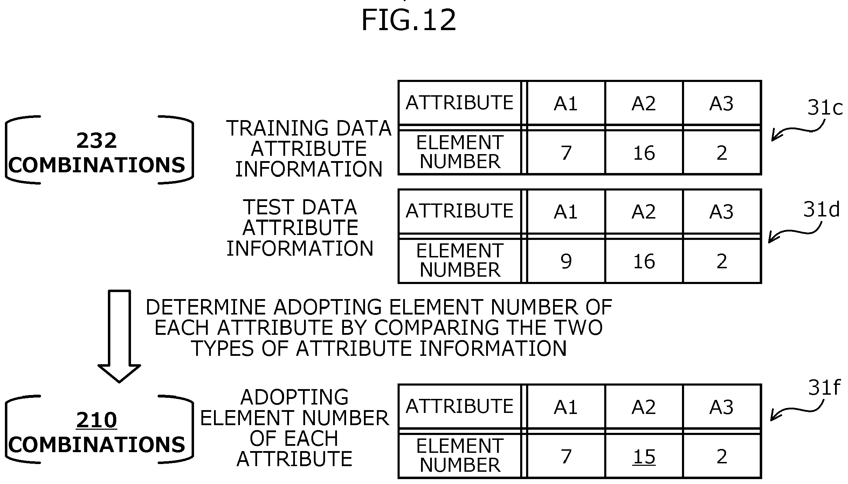

FIG. 12 is a diagram illustrating a process performed by the adopting element number determining unit 34a. As illustrated in FIG. 12, the adopting element number determining unit 34a compares the test data attribute information 31d and the training data attribute information 31c, and determines an attribute that decreases the adopting element number thereof and the adopting element number thereof.

For example, if an attribute has an element number in the training data attribute information 31c that is larger than the element number threshold α and that is the same as that in the test data attribute information 31d, the adopting element number determining unit 34a may determine the adopting element number of the attribute in accordance to the value β.

An attribute having an element number the same between the training data attribute information 31c and the test data attribute information 31d has the same data distribution between the training data 31b and the test data 23, in other words, it is assumed that the distribution of the attribute has a small difference between the training data 31b and the test data 23. Consequently, the one embodiment is based on assumption that decrease in the number of effective rows can be suppressed even if the adopting element number of such an attribute is decreased.

If the element number of an attribute in the training data attribute information 31c is larger than the element number of the same attribute in the test data attribute information 31d, the adopting element number determining unit 34a sets (determines) the adopting element number of the attribute to an element number of the test data attribute information 31d. In cases except for the above, the adopting element number determining unit 34a sets the adopting element number to the element number of the attribute in the training data attribute information 31c.

Thus, in the case where the element number of an attribute in the training data 31b is different from that in the test data 23, the training data 31b or the test data 23 definitely loses an element. However, such a lost element is not limited to one having a low appearing frequency. Further, the server 30 is incapable of grasping the distribution of the test data 23. Accordingly, such an attribute having a high possibility that the appearing distribution of an element thereof is different between the training data 31b and the test data 23 may be excluded from the target of decreasing the adopting element number on the basis of the parameter 31e. This can decrease the risk of decreasing the number of effective rows.

In the example of FIG. 12, in accordance with the parameter 31e of α=2 and β=(element number)-1, the adopting element number determining unit 34a determines the adopting element number of the attribute A2, which has an element number "16" commonly to the attribute information 31c and 31d, to be "15". Since the element number of the attribute A3 of the training data attribute information 31c is "2", which is equal to or less than α, the adopting element number is set to "2", which is the element number of the training data attribute information 31c. Further, since the element number the attribute A1 of the training data attribute information 31c is "7", which is equal to or less than the element number "9" of the test data attribute information 31d, the adopting element number is set to "7", which is the element number of the training data attribute information 31c. This makes it possible to decrease the number of combinations (rows) of the estimating table 31k from 232 to 210.

In this manner, the adopting element number determining unit 34a may determine the lower limit of the element number of elements and the manner of decreasing the element number on the basis of the parameter 31e. By using the parameter 31e, the degree of flexibility in determining the adopting element number can be enhanced.

Further, unlike the comparison example that lists all possible combinations X' based on the attribute information 231 of the test data 230, the adopting element number determining unit 34a may use the training data attribute information 31c. Since the training data attribute information 31c has a high possibility of decreasing the element number of an attribute through anonymization, the training data attribute information 31c can suppress the row number of the estimating table 31k so that one or more elements not having been used in the training the model 31a are omitted.

The element extracting unit 34b extracts one or more elements to be adopted as the combinations X', which are examples of the combinations 3b illustrated in FIG. 6, on the basis of the adopting element number information 31f and the appearing frequency of each element.

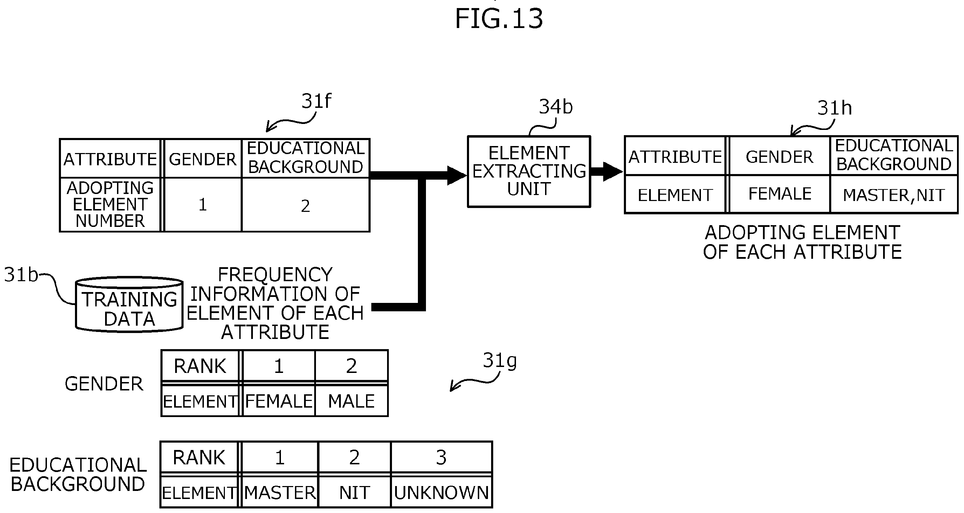

As illustrated in FIG. 13, for each attribute, the element extracting unit 34b may extract adopting elements as many as the element number included in the adopting element number information 31f in the descending order of the appearing frequency included in the appearing frequency information 31g and store the extracted adopting elements, as the adopting element information 31h, into the memory unit 31.

The appearing frequency information 31g is information in which the elements of each attribute included in the training data 31b are sorted in the descending order of the appearing frequency in the training data 31b. As described above, the test data 23, which includes private information, is not provided to the server 30. On the other hand, the training data 31b is stored in the server 30 for training the model 31a.

For the above, the element extracting unit 34b may sort the elements in the training data 31b according to the appearing frequency therein and generate the appearing frequency information 31g. It is sufficient that the appearing frequency information 31g includes at least the frequency order of the elements of an attribute of which the adopting element number is decreased by the adopting element number determining unit 34a. The frequency may be regarded as the "number of times" that the element appears in the training data 31b.

In the example of FIG. 13, the appearing frequencies of the elements of the attribute: gender are "female" and "male" in the descending order, and the appearing frequencies of the elements of the attribute: educational background are "master," "NIT," and "unknown" in the descending order. By using the appearing frequency information 31g, it is possible to obtain elements that are likely to appear also in the test data 23, and therefore, it is possible to suppress a decrease in the number of effective rows of the estimating table 31k.

When the holder 2 provides (discloses) the frequency order of the elements in the test data 23 to the server 30, the server 30 may use the frequency order of the elements in the test data 23 as the appearing frequency information 31g.

The element extracting unit 34b may determine adopting elements for each attribute, in other words, may generate the adopting element information 31h, by extracting elements as many as the adopting element number set in the adopting element number information 31f from the top of the appearing frequency information 31g.

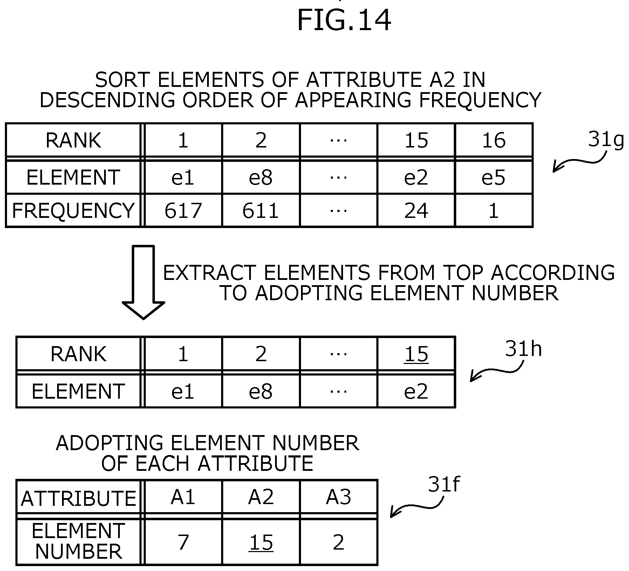

FIG. 14 is a diagram illustrating a process performed by the element extracting unit 34b. As illustrated in FIG. 14, the element extracting unit 34b extracts the elements sequentially from the top of the appearing frequency information 31g, in which the elements of the attribute A2 are sorted in the descending order of the appearing frequency, according to the adopting element number of the attribute A2 set in the adopting element number information 31f.

In the example of FIG. 14, the element extracting unit 34b extracts, as the adopting element information 31h, 15 elements (e1, e8,..., e2) from the top of the frequency order of the elements of the attribute A2 in the training data 31b.

In this manner, for example, by preferentially selecting an element having a higher appearing frequency as an adopting element on the basis of the frequency information of each attribute, it is possible to suppress a decrease in the number of effective rows of the estimating table 31k.

Here, in the training data 31b and the test data 23, one record (row) is represented by a combination of multiple attributes. Therefore, in a case where an element with a low appearing frequency is selected as an adopting element for an attribute even if an element with a high appearing frequency is selected as an adopting element for another attribute, there is a possibility that a record that matches a combination of these selected elements does not appear in the test data 23.

For example, even if the appearing frequency of a combination of "gender: female" and "education background: master" is high in the entire training data 31b but the appearing frequency of the combination with "country: XX" is low, the number of rows of "gender: female", "education background: master", and "country: XX" hardly becomes the number of effective rows in the estimating table 31k.

If an element is not selected as an adopting element, the distribution of the attribute of the element will mismatches between the training data 31b and the test data 23. In this case, a record that does not exist in the test data 23 may appear even if all of the adopting elements are combined. This means that not all records in the estimating table 31k are valid records.

Therefore, considering combinations of the attributes, the one embodiment selects an element having a high appearing frequency as an adopting element on the basis of the training data 31b, which means that a decrease in the number of effective rows is suppressed by deleting an element having a low appearing frequency.

As described above, the element extracting unit 34b is an example of a selecting unit that selects, based on an appearing frequency of each of the attribute values in the obtained data group, one or more attribute values included in the multiple attribute values defined for each of the multiple attribute items.

The generating unit 34c is an example of a first generating unit that generates data having one of the one or more attribute values selected for each of the multiple attribute items as an item value for each of the multiple attribute items. For example, the generating unit 34c generates combination information 31i including all combinations X' of attributes and elements set in the adopting element information 31h based on the elements of each attribute obtained as the adopting element information 31h. As described above, the combination information 31i is data including all the combinations X' of the all item values of each of the multiple attribute items.

The inference result generating unit 35 is an example of a second generating unit that generates inferring data including the generated data (each of the multiple combinations) by the generating unit 34c and an inference result obtained by inputting the generated data (each of the multiple combinations) to a trained model 31a. The inference result generating unit 35 may generate an inference result Y' which is an example of the inference result 3d illustrated in FIG. 6, on the basis of the combination information 31i and the model 31a, and store the inference result Y', as the inference result information 31j, into the memory unit 31. For example, the inference result generating unit 35 inputs the combination information 31i into the model 31a, and obtains an inference result Y', which is an output (e.g., a classification result) from the model 31a.

The method of generating the inference result information 31j may be the same as that of the comparison example illustrated in FIGs. 4 and 5. In one embodiment, the inference result Y' is assumed to be a classification result expressed in binary values of {0, 1}, but is not limited thereto.

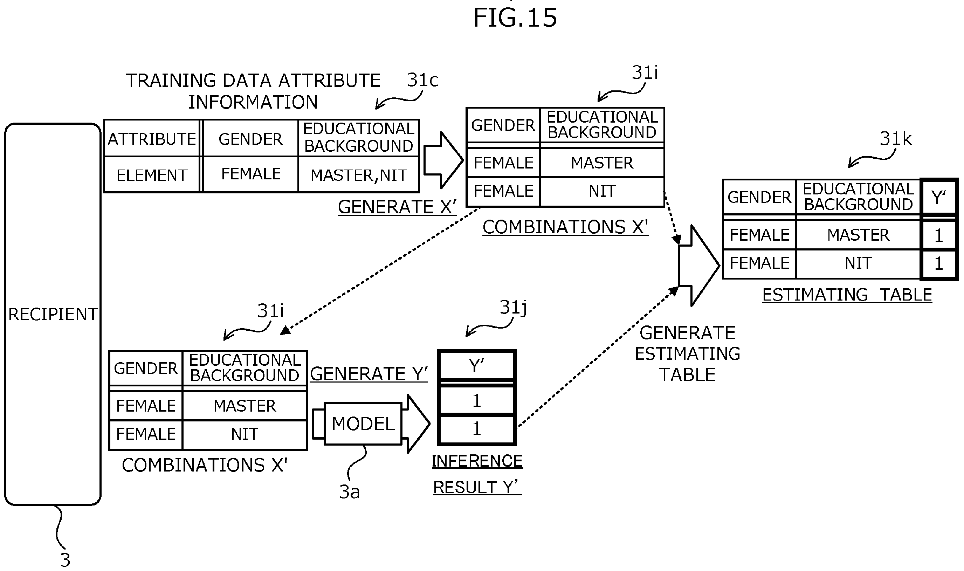

As described above, the combination information 31i is generated by the combination generating unit 34, and the inference result information 31j is generated by the inference result generating unit 35 (see FIG. 15). Further, for example, the inference result generating unit 35 may combine the generated inference result information 31j with the combination information 31i to generate an estimating table 31k which is an example of the estimating table 3e illustrated in FIG. 6. In other words, the combination generating unit 34 and the inference result generating unit 35 are examples of the estimating table generating unit that generates the estimating table 31k.

The requesting unit 36 transmits the estimating table 31k to the terminal 20, requests the terminal 20 (the holder 2) to verify the inference accuracy of the estimating table 31k, and receives the verification result as a response from the terminal 20. For example, the requesting unit 36 may present the received verification result to the recipient 3, or may correct the model 31a by feeding the verification result back to the model constructing unit 33. As described above, the requesting unit 36 is an example of a transmitting unit that transmits a request for an evaluation of inference accuracy of the inferring data to a provider of the data group.

The model providing unit 37 provides the terminal 20 with a service for using the model 31a having undergone learning (training) by the model constructing unit 33 and verification by the combination generating unit 34, the inference result generating unit 35, and the requesting unit 36. For example, the model providing unit 37 may provide the terminal 20 with a service for inputting the personal data 21 into the model 31a and obtaining the output result. Alternatively, the model providing unit 37 may make it possible to use the model 31a on the terminal 20 by transmitting the execution environment of the model 31a to the terminal 20.

### <1-4> Example of Operation:

Next, an example of operation of the machine learning system 1 according to the one embodiment will now be described. The following description assumes a case where the model 31a is trained and verified using the data of the categorical attribute of "Adult data as an example.

### <1-4-1> Example of Operation of the Server:

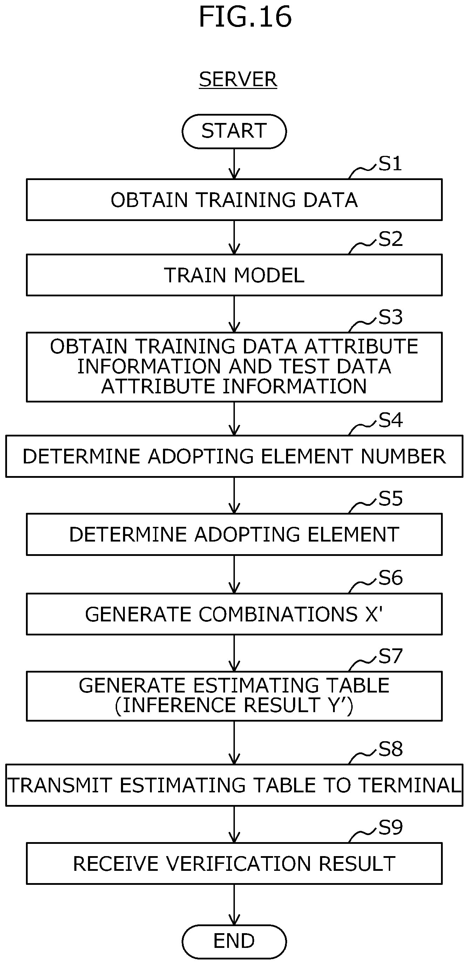

First, an example of operation of the server 30 will now be described. FIG. 16 is a flow diagram illustrating an example of operation of the server 30.

As illustrated in FIG. 16, in the server 30, the obtaining unit 32 obtains the training data 22 from the terminal 20 and stores the training data 22, as the training data 31b, into the memory unit 31 (Step S1).

The model constructing unit 33 trains (learns) the model 31a by using the training data 31b as an input (Step S2) .

The obtaining unit 32 obtains the training data attribute information 24 and the test data attribute information 25 from the terminal 20 and stores the information 24 and 25, as the training data attribute information 31c and the test data attribute information 31d, into the memory unit 31 (Step S3). Step S3 may be performed in parallel with Step S1 or S2, or before Step S1.

The adopting element number determining unit 34a of the combination generating unit 34 determines the number of adopting elements of each attribute using the anonymized training data 31b, the training data attribute information 31c, the test data attribute information 31d, and the parameter 31e stored in the memory unit 31 (Step S4).

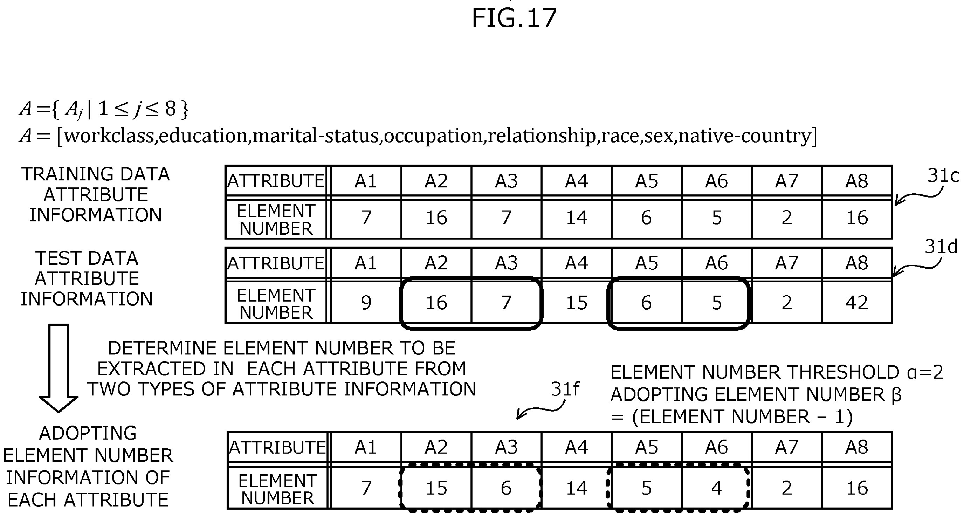

For example, as illustrated in FIG. 17, it is assumed that the training data 31b is data A including the attributes A1 to A8, and the parameter 31e is α=2 and β=(element number) -1.

In this case, the adopting element number determining unit 34a compares the training data attribute information 31c with the test data attribute information 31d, and selects attributes A2, A3, A5, and A6 each of which has an element number being equal to or larger than α and being common between the training data 31b and the test data 23. Then, the adopting element number determining unit 34a determines the "(element number)-1" of each of the selected attributes A2, A3, A5, and A6 as the adopting element number on the basis of β, and stores the adopting element number information 31f into the memory unit 31.

The adopting element number determining unit 34a sets an adopting element number of an attribute whose element number of the training data 31b is larger than the element number in the test data 23 as the element number of the test data attribute information 31d. In addition, the adopting element number determining unit 34a sets, to the element number of the training data attribute information 31c, an adopting element number of another attribute, e.g., an attribute having an element number in the test data 23 larger than the element number in the training data 23 (see attributes A1, A4, A7, and A8).

The element extracting unit 34b determines an adopting element of the attribute selected by the adopting element number determining unit 34a on the basis of the adopting element number information 31f and the appearing frequency information 31g (Step S5).

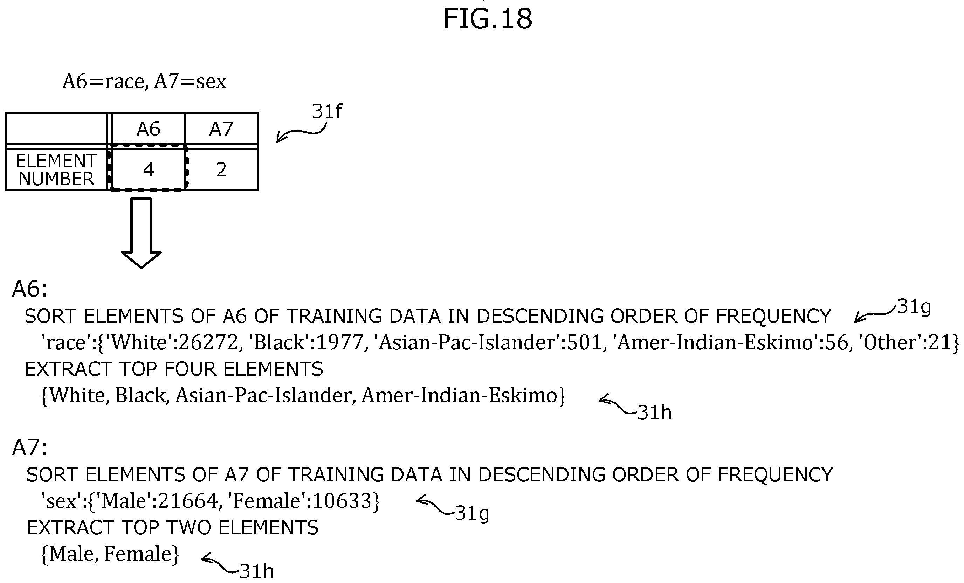

For example, as illustrated in FIG. 18, focusing on the attributes A6 and A7, the element extracting unit 34b generates the appearing frequency information 31g that sorts the elements of each of the attributes A6 and A7 of the training data 31b in the descending order of the appearing frequency. Then, the element extracting unit 34b extracts the top four elements of the attribute A6 and the top two elements of the attribute A7 of the respective appearing frequencies in accordance with the adopting element numbers (4, 2) of the attributes A6 and A7 of the adopting element number information 31f, and records the extracted elements as the adopting element information 31h.

In the example of FIG. 18, the element extracting unit 34b extracts the following elements each having a high appearing frequency among the respective elements of the attributes A6 and A7, and stores the extracted elements, as the adopting element information 31h, into the memory unit 31.
A6:{White, Black Asian-Pac-Islander, Amer-Indian-Eskimo}
A7:{Male, Female}

The generating unit 34c generates the combination information 31i based on the elements (adopting element information 31h) of each attribute obtained by the element extracting unit 34b (Step S6).

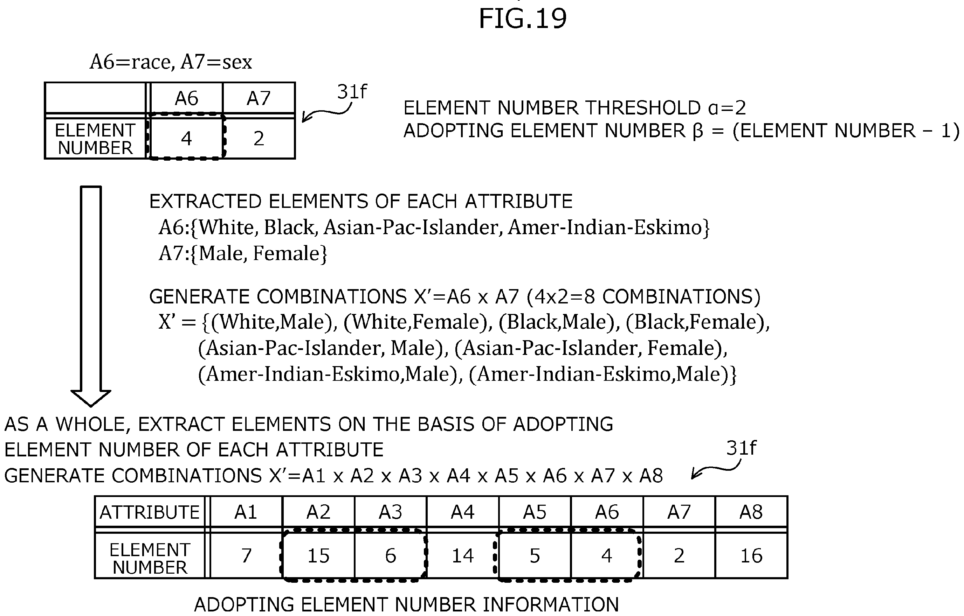

For example, as illustrated in FIG. 19, focusing on the attributes A6 and A7, the generating unit 34c generates the following A6×A7 (i.e., 4×2=8) combinations X'.

X'={(White,Male), (White,Female),(Black,Male), (Black,Female), (Asian-Pac-Islander, Male), (Asian-Pac-Islander, Female),(Amer-Indian-Eskimo,Male), (Amer-Indian-Eskimo,Male)}

As illustrated in FIG. 19, for the entire "Adult data", the generating unit 34c generates combinations X' as many as A1 x A2 xA3 x A4 x A5 x A6 x A7 x A8 based on the adopting element number of the respective attributes, and stores the combinations X', as the combination information 31i, into the storing unit 31. In the example of FIG. 19, the adopted element number of adopting elements of each of the attributes A2, A3, A6, and A7 is decreased (due to extraction) from the element numbers in the training data 31b, so that the decrease in the number of combinations X' (the number of rows) is achieved.

The inference result generating unit 35 generates inference result information 31j based on the combination information 31i generated by the combination generating unit 34 and the model 31a (Step S7). For example, the inference result generating unit 35 may provide the model 31a with the inference result information 31j as the input and may obtain an output from the model 31a as the inference result information 31j. Furthermore, the inference result generating unit 35 may generate the estimating table 31k by combining the combination information 31i and the inference result information 31j.

The requesting unit 36 transmits the estimating table 31k generated by the inference result generating unit 35 to the terminal 20 (Step S8), and requests verification (evaluation) of the model 31a using the estimating table 31k. The requesting unit 36 receives the verification result from the terminal 20 (Step S9), and the process ends. The verification result may be presented to the recipient 3 or may be fed back to the model constructing unit 33.

### <1-4-2> Example of Operation of Terminal:

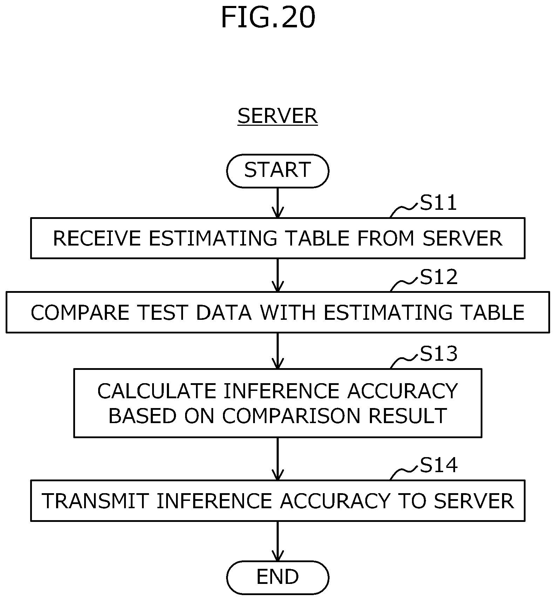

Next, description will now be made in relation to an example of operation of the terminal 20. FIG. 20 is a flow diagram illustrating an example of operation of the terminal 20.

As illustrated in FIG. 20, the terminal 20 receives the estimating table 31k from the server 30 (Step S11).

The verifying unit 26 of the terminal 20 compares the test data 23 with the estimating table 31k (Step S12), and calculates the inference accuracy of the estimating table 31k on the basis of the comparison result (Step S13).

As an example, the verification unit 26 may calculate, as inference accuracy, a ratio of the number of records in the estimating table 31k that match the records in the test data 23 (the combinations X and the inference result Y) to the number of records in the test data 23. The method of calculating the inference accuracy is not limited to this, and various known methods may be employed.

Then, the terminal 20 transmits the calculated inference accuracy to the server 30 (Step S14), and the process ends.

### <1-5> Effect of One Embodiment:

As described above, the machine learning system 1 according to the one embodiment can be applied when the recipient 3 generates the estimating table 31k in order to evaluate the accuracy of the model 31a, which has been trained with anonymized data, with the row data.

For example, according to the machine learning system 1 of the one embodiment, the server 30 determines whether or not to adopt each element in the estimating table 31k on the basis of the appearing frequency in the training data 31b, in other words, determines whether or not to delete each element. As a result, since a combination of appropriate elements can be included in the estimating table 31k, the ratio of the number of effective rows in the estimating table 31k can be improved or maintained, in other words, a decrease in the number of effective rows can be suppressed. In addition, since the number of combinations of attribute values decreases by the selection, the number of rows (the number of records) in the estimating table 31k can be suppressed. This means that the load required for the model evaluation can be reduced.

For example, it is assumed that the model 31a is trained and verified by using a categorical attribute of "Adult data" in which the training data 31b includes a record of 32,561 rows and the test data 23 includes 16,281 rows of records. The parameter 31e is assumed to have the element number threshold α=2 and the adopting element number β=(element number)-1.

Under this condition, when the method according to the comparison example illustrated in FIGS. 4 and 5 is implemented, the number of rows of the estimating table 330 is 38,102,400, the number of effective rows is 5,335, and the ratio of the number of effective rows in the estimating table 330 is 0.014%.

On the other hand, under this condition, when the method according to the one embodiment is implemented, the number of rows of the estimating table 31k is 5,644,800, the number of effective rows is 4,379, and the ratio of the number of effective rows in the estimating table 31k is 0.077%.

As described above, the method according to the one embodiment can improve the ratio of the number of effective rows, reducing the number of rows of the estimating table 31k to about one-seventh of that of the comparison example.

### <2> Modification:

Next, modifications of the one embodiment will now be described.

### <2-1> First Modification:

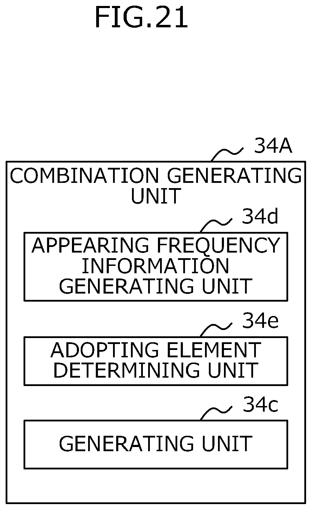

As illustrated in FIG. 21, the server 30 according to the first modification may include a combination generating unit 34A that is different from the combination generating unit 34 according to the one embodiment illustrated in FIG. 7. The remaining configurations of the server 30 and the terminal 20 are the same as those of the one embodiment, so the description and illustration thereof are omitted.

As illustrated in FIG. 21, the combination generating unit 34A according to the first modification may include an appearing frequency information generating unit 34d, an adopting element determining unit 34e, and a generating unit 34c. The generating unit 34c is the same as the generating unit 34c according to the one embodiment.

The appearing frequency information generating unit 34d and the adopting element determining unit 34e may include functions common to the element extracting unit 34b and the adopting element number determining unit 34a, respectively. For example, the combination generating unit 34A can be said to execute the determination of the adopting element number and the determination of the adopting elements based on the adopting element number and the appearing frequency performed by the combination generating unit 34 in the reverse order.

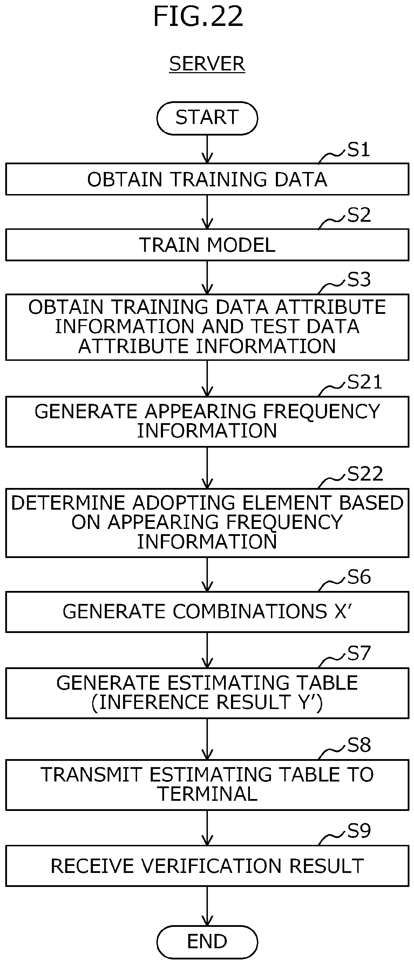

The appearing frequency information generating unit 34d generates appearing frequency information 31g for all the attributes (see Step S21 of FIG. 22). As a method of generating the appearing frequency information 31g, the same method as that performed by the element extracting unit 34b according to the one embodiment may be applied.

Like the adopting element number determining unit 34a according to the one embodiment, the adopting element determining unit 34e determines one or more attributes of which element number is to be decreased and adopting element numbers by comparing the training data attribute information 31c with the test data attribute information 31d on the basis of the parameter 31e.

In addition, the adopting element determination unit 34e selects, for each of the determined attributes, the adopting elements as many as the adopting element number in the descending order of the appearing frequency based on the appearing frequency information 31g (see Step S22 in FIG. 22).

As described above, the appearing frequency information generating unit 34d and the adopting element determining unit 34e are an example of a selecting unit that selects, based on an appearing frequency of each of the attribute values in the obtained data group, one or more attribute values included in the multiple attribute values defined for each of the multiple attribute items.

As described above, the first modification can attain the same effect as that of the one embodiment.

### <2-2> Second Modification:

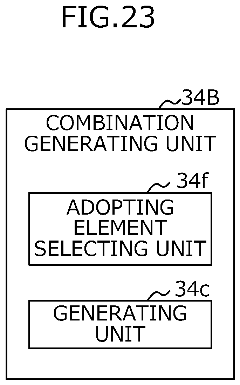

As illustrated in FIG. 23, the server 30 according to the second modification may include a combination generating unit 34B that is different from the combination generating unit 34 according to the one embodiment illustrated in FIG. 7. The remaining configurations of the server 30 and the terminal 20 are the same as those of the one embodiment, so the description and illustration thereof are omitted.

As illustrated in FIG. 23, the combination generating unit 34B according to the second modification may include an adopting element selecting unit 34f and a generating unit 34c. The generating unit 34c is the same as the generating unit 34c according to the one embodiment.

The adopting element selecting unit 34f generates the appearing frequency information 31g for all the attributes. As a method of generating the appearing frequency information 31g, the same method as that performed by the element extracting unit 34b according to the one embodiment may be applied.

Then, the adopting element selecting unit 34f selects, for each attribute, an element having an appearing frequency equal to or more than a given frequency as the adopting element, in other words, discards an element having an appearing frequency less than the given frequency.

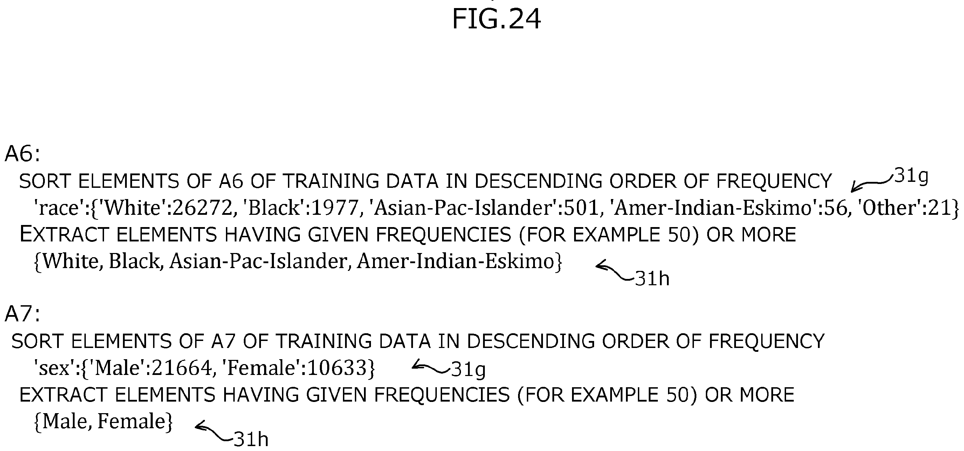

For example, as illustrated in FIG. 24, focusing on the attributes A6 and A7 of the categorical attributes of "Adult data", the adopting element selecting unit 34f extracts one or more elements each having a given frequency (e.g., 50) or more as an adopting element from each of the attributes A6 and A7, and generates adopting element information 31h. The given frequency serving as the threshold may be set to a different value with each attribute. The given frequency may be a ratio (%) of the number of appearances of each element to the total number of appearances of all the elements in the attribute alternatively to the frequency or the number of times.

As described above, the adopting element selecting unit 34f is an example of a selecting unit that selects, based on an appearing frequency of each of the attribute values in the obtained data group, one or more attribute values included in the multiple attribute values defined for each of the multiple attribute items.

As described above, the combination generating unit 34B according to the second modification omits the determination of the adopting element number performed in the one embodiment and the first modification, and selects one or more elements each having a given frequency or more as adopting elements for the respective attributes. Also in the method according to the second modification, since an element having a high appearing frequency is preferentially selected as an adopting element, and can therefore bring the same effects as those of the one embodiment. Further, as compared with the first embodiment and the first modification, the process of the combination generating unit 34B can be simplified, so that the processing loads of the server 30 can be reduced.

The adopting element selecting unit 34f selects an element having a given frequency or more as an adopting element for all the attributes, but the present invention (US 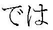 present embodiment) is not limited to this.

For example, the adopting element selecting unit 34f may compare the training data attribute information 31c with the test data attribute information 31d, and select one or more attributes (attributes of which element number is to decrease) each of which has an element number equal to or larger than α and also the same between the training data 31b and the test data 23. This determination of the attributes may be performed by the same method as that of the adopting element number determining unit 34a according to the one embodiment.

Then, the adopting element selecting unit 34f may select an element having a given frequency or more as the adopting element in regard of the determined attribute.

Consequently, one or more attributes having a high possibility that the appearance distribution of elements thereof is different between the training data 31b and the test data 23 can be excluded from the target of a decrease in the adopting element number, so that the risk of decreasing of the number of effective rows can decrease.

### <3> Example of Hardware Configuration:

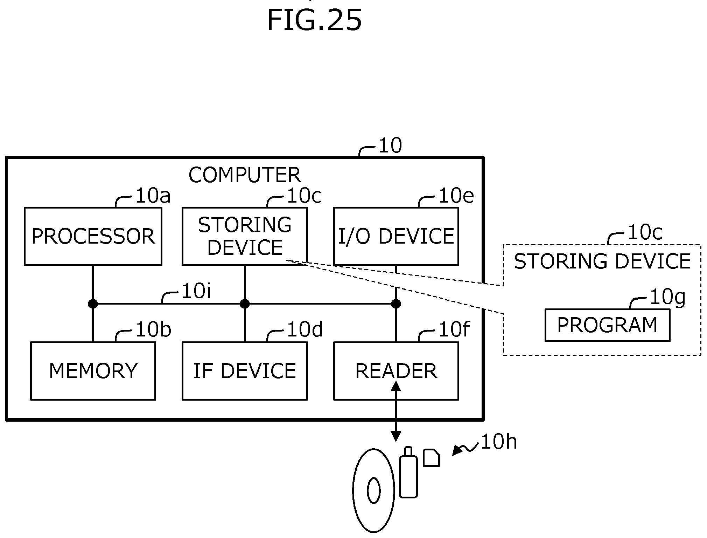

FIG. 25 is a block diagram illustrating a HW (Hardware) configuration example of a computer 10 that achieves the functions of the server 30. If multiple computers are used as the HW resources for achieving the functions of the server 30, each of the computers may include the HW configuration illustrated in FIG. 25.

As illustrated in FIG. 25, the computer 10 may illustratively include, as the HW configuration, a processor 10a, a memory 10b, a storing device 10c, an IF (Interface) unit 10d, an I/O (Input/Output) unit 10e, and a reader 10f.

The processor 10a is an example of an arithmetic processing device that performs various controls and arithmetic operations. The processor 10a may be connected to each block in the computer 10 so as to be mutually communicable via a bus 10i. The processor 10a may be a multiprocessor including multiple processors or a multi-core processor including multiple processor cores, or may have a configuration having multiple multi-core processors.

An example of the processor 10a is an integrated circuit (IC; Integrated Circuit) such as a CPU, an MPU, a GPU, an APU, a DSP, an ASIC, and an FPGA. Alternatively, the processor 10a may be a combination of two or more integrated circuits exemplified as the above.

The processing function of the obtaining unit 32, the combination generating unit 34, 34A, and 34B, the inference result generating unit 35, and the requesting unit 36 of the server 30 may be achieved by a CPU, an MPU, or the like serving as the processor 10a. The processing function of the model constructing unit 33 and the model providing unit 37 may be achieved by an accelerator of a GPU, an ASIC (e.g., a TPU), or the like of the processor 10a.

The CPU is an abbreviation of Central Processing Unit, the MPU is an abbreviation of Micro Processing Unit, the GPU is an abbreviation of Graphics Processing Unit, and the APU is an abbreviation of Accelerated Processing Unit. The DSP is an abbreviation of Digital Signal Processor, the ASIC is an abbreviation of Application Specific IC, and the FPGA is an abbreviation of Field-Programmable Gate Array. The TPU is an abbreviation of Tensor Processing Unit.

The memory 10b is an example of a HW that stores information such as various data and programs. An example of the memory 10b may be one or the both of a volatile memory such as a DRAM (Dynamic RAM) and a non-volatile memory such as a PM (Persistent Memory).

The storing device 10c is an example of a HW that stores information such as various data and programs. Examples of the storing device 10c include various storing devices exemplified by a magnetic disk device such as an HDD (Hard Disk Drive), a semiconductor drive device such as an SSD (Solid State Drive), and a non-volatile memory. The non-volatile memory may be, for example, a flash memory, an SCM (Storage Class Memory), a ROM (Read Only Memory), or the like.

The storing device 10c may store a program 10g (control program) that achieves all or part of the functions of the computer 10. For example, by expanding the program 10g stored in the storing device 10c onto the memory 10b and executing the expanded program 10g, the processor 10a of the server 30 can achieve the function of the server 30 illustrated in FIGs. 7, 21, or 23.

A storing region that at least one of the memory 10b and the storing device 10c has may store the information 31a to 31k illustrated in FIG. 7. In other words, the memory unit 31 illustrated in FIG. 7 may be achieved by a storing region that at least one of the memory 10b and the storing device 10c has.

The IF unit 10d is an example of a communication IF that controls connection to and communication with the network 40. For example, the IF unit 10d may include an adaptor compatible with a LAN (Local Area Network) such as Ethernet (registered trademark) or an adaptor conforming to an optical communication, such as FC (Fibre Channel)) . The adaptor may be compatible with one or both of wired and wireless communication schemes. For example, the server 30 may be communicably connected to the terminal 20 via the IF unit 10d. Furthermore, the program 10g may be downloaded from the network 40 to the computer 10 through the IF and then stored into the storing device 10c.

The I/O unit 10e may include an input device, an output device, or both. Examples of the input device may be a keyboard, a mouse, and a touch screen. Examples of the output device may be a monitor, a projector, and a printer.

The reader 10f is an example of a reader that reads information of data and programs recorded in a recording medium 10h. The reader 10f may include a connecting terminal or a device to which the recording medium 10h can be connected or inserted. Examples of the reader 10f include an adapter conforming to, for example, USB (Universal Serial Bus), a drive device that accesses a recording disk, and a card reader that accesses a flash memory such as an SD card. The program 10g may be stored in the recording medium 10h, and the reader 10f may read the program 10g from the recording medium 10h and then store the read program 10g into the storing device 10c.

The recording medium 10h may illustratively be a non-transitory computer-readable recording medium such as a magnetic/optical disk and a flash memory. The magnetic/optical disk may illustratively be a flexible disk, a CD (Compact Disc), a DVD (Digital Versatile Disc), a Blu-ray disk, an HVD (Holographic Versatile Disc), or the like. The flash memory may illustratively be a semiconductor memory such as a USB memory and an SD card.

The HW configuration of the computer 10 described above is merely illustrative. Accordingly, the computer 10 may appropriately undergo increase or decrease of HW (e.g., addition or deletion of arbitrary blocks), division, integration in an arbitrary combination, and addition or deletion of the bus. For example, at least one of the I/O unit 10e and the reader 10f may be omitted in the server 30.

The terminal 20 may be achieved by the same HW configuration as that of the above computer 10. For example, by expanding the program 10g stored in the storing device 10c onto the memory 10b and executing the expanded program 10g, the processor 10a of the terminal 20 can achieve the function of the terminal 20 illustrated in FIG. 7.

### <4> Miscellaneous:

The technique according to the one embodiment, the first modification, and the second modification described above can be changed or modified as follows.

For example, the obtaining unit 32, the model constructing unit 33, the combination generating unit 34, the inference result generating unit 35, the requesting unit 36, and the model providing unit 37 included in the server 30 illustrated in FIG. 7 may be merged in any combination or may be divided. In addition, the adopting element number determining unit 34a, the element extracting unit 34b, and the generating unit 34c included in the combination generating unit 34 illustrated in FIG. 7 may be merged in an any combination, or may be divided. Furthermore, the appearing frequency information generating unit 34d, the adopting element determining unit 34e, and the generating unit 34c included in the combination generating unit 34A illustrated in FIG. 21 may be merged in any combination, or may be divided. The adopting element selecting unit 34f and the generating unit 34c included in the combination generating unit 34B illustrated in FIG. 23 may be merged or may be divided.

The server 30 illustrated in FIGS. 7, 21, and 23 may have a configuration that achieves each processing function by multiple apparatuses cooperating with each other via a network. As an example, the obtaining unit 32, the requesting unit 36, and the model providing unit 37 may be a Web server, the model constructing unit 33, the combination generating unit 34, and the inference result generating unit 35 may be an application server, and the memory unit 31 may be a DB (Database) server. In this case, the processing function as the server 30 may be achieved by the web server, the application server, and the DB server cooperating with one another via a network.

Furthermore, the respective processing functions relating to the construction (the obtaining unit 32 and the model construction unit 33) of the model 31a, the verification (the obtaining unit 32, the combination generating unit 34, the inference result generating unit 35 and the requesting unit 36) of the model 31a, and the providing (the model providing unit 37) of the model 31a may be provided by respective different apparatuses. Also in this case, the processing function as the server 30 may be achieved by these apparatuses cooperating with one another via a network.

In the one embodiment and the first and second modifications, the anonymous data is used as the training data 31b, and the raw data is used as the test data 23 and the personal data 21, but the data are not limited thereto.

Alternatively, the administrator of the server 30 may hold the first education data, and the server 30 may train the model 31a using the first education data. Furthermore, when the administrator verifies the model 31a using second education data which is held by another person (e.g., the holder 2) and which has the same data distribution as that of the first education data, the method according to the one embodiment and the first and second modification can be applied. In this case, since the first education data serving as the training data 31b is data owned by the administrator and is not data of the holder 2, the first education data may be raw data.

### REFERENCE SIGNS LIST

- 1: machine learning system
- 10: computer
- 2: holder
- 2a,21: personal data
- 2b,23: test data
- 20: terminal
- 22,31b: training data
- 24,31c: training data attribute information
- 25,31d: test data attribute information
- 26: verifying unit
- 3: recipient
- 3a: attribute information
- 3b: combination
- 3c,31a: model
- 3d: inference result
- 3e,31k: estimating table
- 30: server
- 31: memory unit
- 31e: parameter
- 31f: adopting element number information
- 31g: appearing frequency information
- 31h: adopting element information
- 31i: combination information
- 31j: inference result information
- 32: obtaining unit
- 33: model constructing unit
- 34,34A,34B: combination generating unit
- 34a: adopting element number determining unit
- 34b: element extracting unit
- 34c: generating unit
- 34d: appearing frequency information generating unit
- 34e: adopting element determining unit
- 34f: adopting number selecting unit
- 35: inference result generating unit
- 36: requesting unit
- 37: model providing unit
- 40: network

## Claims

1. A computer-implemented control method comprising:
obtaining a data group (3a,31b) including data that loses an attribute value of at least one of attribute items among a plurality of attribute items each defining a plurality of attribute values;
selecting, based on an appearing frequency (31g) of each of the attribute values in the obtained data group (3a,31b), one or more attribute values included in the plurality of attribute values defined for each of the plurality of attribute items;
generating data (3b,31i) having one of the one or more attribute values selected for each of the plurality of attribute items as an item value for each of the plurality of attribute items;
generating inferring data (3e,31k) including the generated data (3b,31i) and an inference result (3d,31j) obtained by inputting the generated data (3b,31i) to a trained model (3c,31a); and
transmitting a request for an evaluation of inference accuracy of the inferring data (3e,31k) to a provider of the data group (3a,31b).

2. The computer-readable control method according to claim 1, further comprising:
obtaining first information (3a,31c) and second information (31d), the first information (3a,31c) being related to the plurality of attribute values defined for each of the plurality of attribute items included in the data group (31b), the second information (31d) being related to a plurality of attribute values defined for each of a plurality of attribute items included in evaluation data group (2b,23) used for the evaluation of the inference accuracy of the inferring data (3e,31k), wherein
the selecting selects the one or more attribute values based on a result of comparing the first information (3a,31c) with the second information (31d) and the appearing frequency (31g) .

3. The computer-readable control method according to claim 2, further comprising:
specifying an attribute item having a number of attribute values being common to the first information (3a,31c) and the second information (31d) and being larger than a threshold; and
determining a number less than the number of attribute values as a selection number of attribute values being selected from the plurality of attribute values defined for the specified attribute item, wherein
the selecting selects, based on an appearing frequency of the specified attribute item in the data group (31b), the one or more attribute values according to the selection number from the plurality of attribute values defined in the specified attribute item.

4. The computer-readable control method according to any one of claims 1 to 3, wherein
the selecting selects the one or more attribute values among the plurality of the attribute values in a descending order of appearing frequency (31g) of each of the plurality of attribute values in the data group (31b).

5. The computer-readable control method according to claim 1, wherein
the selecting selects the one or more attribute values each having an appearing frequency equal to or more than a given frequency in the data group (31b) among the plurality of attribute values of each of the plurality of attribute items.

6. The computer-readable control method according to any one of claims 1 to 5, wherein
the generating of the data (3b,31i) generates the data (3b,31i) including all combinations of an item value of each of the plurality of attribute items; and
the generating of the inferring data (3e,31k) generates the inferring data (3e,31k) including each of the combinations included in the generated data (3b,31i) and the inferring data (3e,31k) including the inference result (3d,31j) obtained by inputting each of the combinations included in the generated data (3b,31i) to the trained model (3c,31a).

7. A control program for causing a computer to execute a process comprising:
obtaining a data group (3a,31b) including data that loses an attribute value of at least one of attribute items among a plurality of attribute items each defining a plurality of attribute values;
selecting, based on an appearing frequency (31g) of each of the attribute values in the obtained data group (3a,31b), one or more attribute values included in the plurality of attribute values defined for each of the plurality of attribute items;
generating data (3b,31i) having one of the one or more attribute values selected for each of the plurality of attribute items as an item value for each of the plurality of attribute items;
generating inferring data (3e,31k) including the generated data (3b,31i) and an inference result (3d,31j) obtained by inputting the generated data (3b,31i) to a trained model (3c,31a); and
transmitting a request for an evaluation of inference accuracy of the inferring data (3e,31k) to a provider of the data group (3a, 31b).

8. The control program according to claim 7, the process further comprising:
obtaining first information (3a,31c) and second information (31d), the first information (3a,31c) being related to the plurality of attribute values defined for each of the plurality of attribute items included in the data group (31b), the second information (31d) being related to a plurality of attribute values defined for each of a plurality of attribute items included in evaluation data group (2b,23) used for the evaluation of the inference accuracy of the inferring data (3e,31k), wherein
the selecting selects the one or more attribute values based on a result of comparing the first information (3a,31c) with the second information (31d) and the appearing frequency .(31g).

9. The control program according to claim 8, the process further comprising:
specifying an attribute item having a number of attribute values being common to the first information (3a,31c) and the second information (31d) and being larger than a threshold; and
determining a number less than the number of attribute values as a selection number of attribute values being selected from the plurality of attribute values defined for the specified attribute item, wherein
the selecting selects, based on an appearing frequency of the specified attribute item in the data group (31b), the one or more attribute values according to the selection number from the plurality of attribute values defined in the specified attribute item.

10. The control program according to any one of claims 7 to 9, wherein
the selecting selects the one or more attribute values among the plurality of the attribute values in a descending order of appearing frequency (31g) of each of the plurality of attribute values in the data group (31b).

11. The control program according to claim 7, the process further comprising:
wherein
the selecting selects the one or more attribute values each having an appearing frequency equal to or more than a given frequency in the data group (31b) among the plurality of attribute values of each of the plurality of attribute items.

12. The control program according to any one of claims 7 to 11, wherein
the generating of the data (3b,31i) generates the data (3b,31i) including all combinations of an item value of each of the plurality of attribute items; and
the generating of the inferring data (3e,31k) generates the inferring data (3e,31k) including each of the combinations included in the generated data (3b,31i) and the inferring data (3e,31k) including the inference result (3d,31j) obtained by inputting each of the combinations included in the generated data (3b,31i) to the trained model (3c,31a).

13. An information processing device comprising:
an obtaining unit (32) that obtains a data group (3a,31b) including data that loses an attribute value of at least one of attribute items among a plurality of attribute items each defining a plurality of attribute values;
a selecting unit (34b, 34d, 34e, 34f) that selects, based on an appearing frequency (31g) of each of the attribute values in the obtained data group (3a,31b), one or more attribute values included in the plurality of attribute values defined for each of the plurality of attribute items;
a first generating unit (34c) that generates data (3b,31i) having one of the one or more attribute values selected for each of the plurality of attribute items as an item value for each of the plurality of attribute items;
a second generating unit (35) that generates inferring data (3e,31k) including the generated data (3b,31i) and an inference result (3d,31j) obtained by inputting the generated data (3b,31i) to a trained model (3c,31a); and
a transmitting unit (36) that transmits a request for an evaluation of inference accuracy of the inferring data (3e,31k) to a provider of the data group (3a,31b).

14. The information processing device according to claim 13, wherein
the obtaining unit (32) obtains first information (3a,31c) and second information (31d), the first information (3a,31c) being related to the plurality of attribute values defined for each of the plurality of attribute items included in the data group (31b), the second information (31d) being related to a plurality of attribute values defined for each of a plurality of attribute items included in evaluation data group (2b, 23) used for the evaluation of the inference accuracy of the inferring data (3e,31k), and
the selecting unit (34b,34d,34e) selects the one or more attribute values based on a result of comparing the first information (3a,31c) with the second information (31d) and the appearing frequency (31g).

15. The information processing device according to claim 14, wherein
the selecting unit (34b)
specifies an attribute item having a number of attribute values being common to the first information (3a,31c) and the second information (31d) and being larger than a threshold, and
determines a number less than the number of attribute values as a selection number of attribute values being selected from the plurality of attribute values defined for the specified attribute item, and
selects, based on an appearing frequency of the specified attribute item in the data group (31b), the one or more attribute values according to the selection number from the plurality of attribute values defined in the specified attribute item.

16. The information processing device according to any one of claims 13 to 15, wherein
the selecting unit (34b,34d,34e) selects the one or more attribute values among the plurality of the attribute values in a descending order of appearing frequency (31g) of each of the plurality of attribute values in the data group (31b).

17. The information processing device according to claim 13, wherein
the selecting unit (34f) selects the one or more attribute values each having an appearing frequency equal to or more than a given frequency in the data group (31b) among the plurality of attribute values of each of the plurality of attribute items.

18. The information processing device according to any one of claims 13 to 17, wherein
the first generating unit (34c) generates the data (3b,31i) generates the data (3b,31i) including all combinations of an item value of each of the plurality of attribute items; and
the second generating unit (35) generates of the inferring data (3e,31k) generates the inferring data (3e,31k) including each of the combinations included in the generated data (3b,31i) and the inferring data (3e,31k) including the inference result (3d,31j) obtained by inputting each of the combinations included in the generated data (3b,31i) to the trained model (3c,31a).
